# EUROPEAN PATENT SPECIFICATION

(11) **EP 2 457 814 B1**
(45) Date of publication and mention of the grant of the patent: **26.02.2014**
(21) Application number: 11190660.8
(22) Date of filing: 25.11.2011
(51) Int. Cl.: B62J 35/00, B62J 37/00

(54) **Motorcycle**
Motorrad
Motocyclette

(30) Priority: 26.11.2010 JP 2010263728
(43) Date of publication of application: 30.05.2012
(73) Proprietor: Yamaha Hatsudoki Kabushiki Kaisha, Iwata-shi, Shizuoka (JP)
(72) Inventor: YANAGIHARA, Yuuki, Iwata-shi, Shizuoka (JP); AKAO, Takuya, Iwata-shi, Shizuoka (JP)
(74) Representative: Grünecker, Kinkeldey, Stockmair & Schwanhäusser

(56) References cited:
- JP-A- 2004 182 018
- JP-A- 2005 138 712
- JP-A- 2009 196 553

## Description

The present invention relates to motorcycles, and more specifically to a motorcycle including a fuel tank. A motorcycle according to the preamble of claim 1 is known from JP 2004 182018 A, which is the application document for Japanese Patent No. 4176456.

In recent years, there is an increasing demand for motorcycles of a type where a fuel tank is disposed above the rear wheel and the motorcycle includes large-diameter wheels (for the front and rear wheels). In this type of motorcycle, an increased diameter of the rear wheel decreases a distance between the fuel tank and the rear wheel. Since the rear wheel is subject to bouncing in an up-down direction while the motorcycle is in motion, it is desirable that the fuel tank is disposed at a highest possible position, so that a sufficient clearance can be provided between the fuel tank and the rear wheel. However, even if the motorcycle wheel diameter is increased, it is impossible to significantly raise the height of riding seat (hereinafter simply called seat) . Therefore, it is impossible, either, to significantly raise the height of fuel tank which is disposed below the seat. In an attempt to solve this, Japanese Patent No. 4176456 discloses a motorcycle, where a fuel tank has a bottom surface which has an upward recessing center portion.

In addition, JP 2009 196553 A discloses a saddle ride type vehicle wherein the fuel tank has its horizontal seam part installed below a occupant seat, a fuel pump attached to the fuel tank from above, and a fuel pump cover provided between the fuel pump and the occupant seat. The fuel pump cover is provided with a hanging part hanging below the seam part. The hanging part is provided with a harness guide in an integrated manner for guiding a pump harness connected to the fuel pump so as to cover the seam part.

Moreover, JP 2005 138712 A discloses a fuel supply equipment for a scooter type motorcycle wherein a fuel tank is provided behind an article storage box and above a rear wheel. A mounting part of a fuel tank built-in type fuel pump is provided on a front side of the fuel tank adjacent to a rear side of the article storage box. The rear side of the article storage box is formed to be a substantially flat surface rising upwardly and backwardly in the diagonal direction above the rear wheel. The front side of the fuel tank is arranged along the back side of the article storage box. The fuel tank is formed in a shape in side view of the motorcycle so that a bottom surface is longer than an upper surface, and a fuel filling port is formed in the upper surface.

In the motorcycle which is disclosed in Japanese Patent 4176456, the fuel tank has an upper wall, a part of which is recessed downward to provide a pump installation area for installation of a fuel pump. Also, the fuel pump has an upper end portion, where a discharging tube for discharging fuel from inside the fuel tank is connected, with the tube coming out of the fuel tank upwardly. Further, the discharging tube is connected with a fuel hose for supplying the fuel which is discharged by the fuel pump to a fuel injection valve.

Now, in the motorcycle which is disclosed in Japanese Patent 4176456, the fuel injection valve for supplying the engine with fuel is disposed at a lower position than the fuel tank. Therefore, the fuel hose must be provided so that it will extend from the discharging tube to the fuel injection valve, i.e., so that it will extend from above the fuel tank to below the fuel tank. In order to achieve this, in the motorcycle which is disclosed in Japanese Patent 4176456, a cutout is formed in the fuel tank or the storage box, for the fuel hose to pass through.

However, forming a cutout in the fuel tank or in the storage box means that the capacity of the fuel tank or of the storage box must be decreased.

One idea for avoiding the formation of a cutout in the fuel tank or the storage box is to attach the fuel pump on a bottom surface portion of the fuel tank, and provide the discharging tube so that it will come out downwardly from the fuel tank bottom surface. In this case, the arrangement allows connection of the fuel hose to the discharging tube under the fuel tank, eliminating the need for forming a cutout in the fuel tank or in the storage box which would otherwise be necessary to let the fuel hose to pass through. However, as has been described above, in the motorcycle which is disclosed in Japanese Patent 4176456, the fuel tank bottom surface has an upward recessing center portion, which makes it impossible to provide sufficient space for attaching the fuel pump.

Therefore, a primary object of the present invention is to provide a motorcycle in which capacities of a fuel tank and of a storage box are secured while reducing increase in the height of the riding seat.

Such an object is achieved by a motorcycle according to claim 1.

According to an aspect of the present invention, there is provided a motorcycle which includes a front wheel and a rear wheel; a pair of side frames disposed side by side in a left-right direction to pass above the rear wheel; a storage box supported by the side frames; a fuel tank supported by the side frames behind the storage box; a riding seat covering the fuel tank and the storage box from above; an engine provided at a lower position than the fuel tank; and a pump unit having a discharging portion for discharging fuel. The pump unit is attached to a bottom portion of the fuel tank with the discharging portion protruding downward from the bottom portion of the fuel tank. Further, the fuel tank is above the rear wheel. The bottom portion of the fuel tank includes a first bottom portion provided on one side of the fuel tank's centerline in terms of the left-right direction; a second bottom portion provided on an opposite side of the first bottom portion in terms of the left-right direction, at a higher position than the first bottom portion; and a third bottom portion provided behind the first bottom portion and the second bottom portion, extending from front to rear on an upward inclination. The second bottom portion extends at least to the said one side beyond the centerline. The third bottom portion has an upward recessing recess in its center portion in terms of the left-right direction, and the pump unit is attached to the second bottom portion.

In the present invention, the discharging portion of the pump unit protrudes downward from the bottom portion of the fuel tank. The arrangement makes it possible to connect a fuel hose to the discharging portion of the pump unit under the fuel tank, for supplying fuel to the engine which is provided at a position lower than the fuel tank. In this case, the fuel hose need not be extended from above the fuel tank to below the fuel tank, and therefore there is no need for formation of a cutout in the fuel tank or in the storage box for allowing the fuel hose to pass through. The arrangement therefore eliminates decrease in the capacities of the fuel tank and the storage box.

Also, the bottom portion of the fuel tank includes the first bottom portion, the second bottom portion and the third bottom portion. The third bottom portion is behind the first bottom portion and the second bottom portion, extending from front to rear on an upward inclination. In addition, an upward recessing recess is provided at a central portion in terms of the left-right direction, of the third bottom portion. As described, the fuel tank of the motorcycle has a recess in its bottom portion like the conventional fuel tank, and therefore it is possible to provide a sufficient clearance between the fuel tank and the rear wheel without increasing the height of the riding seat. Thus, it is possible to keep the dimension of the motorcycle in terms of the up-down direction at the same level as of conventional motorcycles.

Also, the second bottom portion is on the other side as opposed to the first bottom portion, and is at a higher position than the first bottom portion. Further, the second bottom portion extends to the said one side, beyond the centerline of the fuel tank in terms of the left-right direction. In this case, it is possible to dispose part of the second bottom portion which is at a higher position than the first bottom portion, above the rear wheel. This makes it possible to provide a sufficient clearance between the second bottom portion and the rear wheel. Also, the pump unit is installed in the second bottom portion. Therefore, part of the second bottom portion is used to provide a sufficient clearance between the fuel tank and the rear wheel, as well as to install the pump unit to the fuel tank. In other words, the pump unit can be installed by utilizing the portion which is made to provide the clearance, within a limitation that the installation should still make it possible to provide a clearance necessary between the second bottom portion and the rear wheel. As described, according to the present motorcycle, it is possible to provide an area on the bottom portion of the fuel tank for installation of the pump unit by utilizing a portion for providing a clearance between the fuel tank and the rear wheel. Thus, it is possible to provide a sufficient amount of area on the bottom portion of the fuel tank for installation of the pump unit while reducing decrease in the capacity of the fuel tank. As a result of the above, it is possible to ensure capacities of the fuel tank and the storage box while reducing increase in the height of the riding seat.

Preferably, the side cover covers the side frames from sides, such that the storage box and fuel tank are supported inside the side cover.

Preferably, the side cover does not overlap the rear wheel in a side view.

In those motorcycles where the front wheel and the rear wheel have large diameters, it is impossible to provide a suf f icient width of the side cover in the up-down direction due to a limitation to the height of the riding seat. Especially in those motorcycles in which the side cover does not overlap the rear wheel in a side view, the side cover tends to have a small width in the up-down direction. However, even in such motorcycles, the arrangement provided by the present invention makes it possible to ensure capacities of the fuel tank and the storage box while reducing increase in the height of the riding seat. In other words, it is possible to provide sufficient capacities for the fuel tank and the storage box while keeping the dimension of the motorcycle in the up-down direction at the same level as of conventional motorcycles.

Further preferably, the discharging portion of the pump unit has a lower end at a lower position than a lower end of the fuel tank in a side view. In this motorcycle, the pump unit is attached at a sufficiently low position on the fuel tank. In other words, the second bottom portion is provided at a sufficiently low position on the fuel tank. In this case, it is possible to give the fuel tank a sufficient capacity since the fuel tank can have an increased dimension in the up-down direction on the second bottom portion.

Further, preferably, the fuel tank has a decreasing width in terms of the left-right direction, toward a rear of the fuel tank. In this case, it is possible to decrease a distance between the side frames which support the fuel tank at a rear portion of the motorcycle since it is possible to decrease the width of the fuel tank in its rear portion. This helps reduce increase in the width of the rear portion of the motorcycle.

Preferably, the motorcycle further includes a fuel hose connected to the discharging portion of the pump unit, and the fuel hose passes under the bottom portion of the fuel tank toward the said one side. In this case, there is no need for providing means (such as a cutout) at a rear end portion of the storage box for the fuel hose to pass through. This makes it possible to provide a sufficient capacity of the storage box.

Further preferably, the bottom portion of the fuel tank further includes a fourth bottom portion provided at a more forward position than the first bottom portion, on the said one side of the second bottom portion. With this arrangement, the fourth bottom portion is at a position higher than the first bottom portion but lower than the second bottom portion, and the fuel hose extends under the fourth bottom portion to the said one side. In this motorcycle, the fourth bottom portion is provided in the bottom portion of the fuel tank in order to provide a region for the fuel hose to pass under the fuel tank. Note here that the fourth bottom portion is at a position higher than the first bottom portion and lower than the second bottom portion. In this case, it is possible to provide a region under the fourth bottom portion for the fuel hose to pass while preventing a position of the fourth bottom portion from being too high. This makes it possible to sufficiently reduce decrease in the capacity of the fuel tank.

Further, preferably, the pump unit further includes a sucking portion for sucking fuel from inside the fuel tank, and the sucking portion is provided above the first bottom portion. Since the first bottom portion is lower than the second bottom portion and the third bottom portion in this arrangement, fuel in the fuel tank tends to gather on the first bottom portion even if the amount of fuel in the fuel tank is small. Therefore, by disposing the sucking portion above the first bottom portion, it becomes possible to suck the fuel in the fuel tank efficiently with the pump unit even if the amount of fuel in the fuel tank is small. It should be noted here that in the case where the fourth bottom portion is provided in the bottom portion of the fuel tank, the first bottom portion has a decreased area than in cases where the fourth bottom portion is not provided. Specifically, the area (the first bottom portion) where fuel gathers when there is a little fuel in the fuel tank is smaller. Even in this case, however, it is possible to suck the fuel in the fuel tank efficiently by disposing the sucking portion of the pump unit above the first bottom portion.

Preferably, the motorcycle further includes a side stand for supporting the motorcycle. With this arrangement, the pump unit further includes a sucking portion for sucking fuel from inside the fuel tank; the side stand supports the motorcycle so that the motorcycle tilts on the said one side; and the sucking portion is provided inside the fuel tank, on the said one side of the centerline of the fuel tank. When the motorcycle is supported by the side stand, the motorcycle is tilted on one side, and therefore fuel in the fuel tank is shifted to one side in the fuel tank. Now in this motorcycle, the sucking portion of the pump unit is provided in the fuel tank, on one side of the centerline of the fuel tank. Therefore, it is possible to suck the fuel sufficiently at the sucking portion even when the fuel is shifted on one side in the fuel tank.

Further preferably, the motorcycle further includes a foot board for a rider to rest the rider's feet, and at least part of the foot board is lower than a straight line which connects a rotating shaft of the front wheel and a rotating shaft of the rear wheel. Providing a sufficient capacity for the fuel tank while reducing increase in the up-down dimension of the motorcycle is difficult in those motorcycles where at least part of the foot board is lower than a straight line which connects the rotating shaft of the front wheel and the rotating shaft of the rear wheel, i.e. in those motorcycles which use large-diameter wheels. However, according to the motorcycles offered by the present invention, in those motorcycles which use large-diameter wheels, it is possible to provide a sufficient capacity for the fuel tank while reducing increase in the up-down dimension of the motorcycle.

Further, preferably, the motorcycle further includes a head pipe; a front fork supported by the head pipe; a handlebar attached to an upper end portion of the front fork; a front cover portion covering the head pipe from ahead; and a handle cover covering the handlebar. With this arrangement, a distance between a front end portion of the front cover portion and an upper end portion of the handle cover in an up-down direction is smaller than a diameter of the front wheel. Providing a sufficient capacity for the fuel tank while reducing increase in the up-down dimension of the motorcycle is difficult in those motorcycles where a distance between the front end portion of the front cover portion and the upper end portion of the handle cover in the up-down direction is smaller than the diameter of the front wheel, i.e. in those motorcycles which use large-diameter wheels. However, according to the motorcycles offered by the present invention, in those motorcycles which use large-diameter wheels, it is possible to provide a sufficient capacity for the fuel tank while reducing increase in the up-down dimension of the motorcycle.

The above-described object and other objects, characteristics, aspects and advantages of the present invention will become clearer from the following detailed description of embodiments of the present invention with reference to the attached drawings.

Fig. 1 is a left side view of a motorcycle according to an embodiment of the present invention.

Fig. 2 is a plan view showing a rear portion of a motorcycle frame: Fig. 2 (a) shows a state where a fuel tank is attached whereas Fig. 2 (b) shows a state where the fuel tank and a storage box are attached.

Fig. 3 is a left side view showing a rear portion of the motorcycle frame.

Fig. 4 is a right side view of the fuel tank.

Fig. 5 is a front view of the fuel tank.

Fig. 6 is an illustrative end view of the fuel tank.

Fig. 7 includes a bottom view showing a rear portion of the motorcycle frame, the fuel tank and the storage box: Fig. 7 (a) shows a state where the fuel tank does not have a pump unit attached whereas Fig. 7 (b) shows a state where the fuel tank has a pump unit attached.

Fig. 8 is a left side view of a motorcycle according to another embodiment of the present invention.

Fig. 9 is a left side view of a motorcycle according to still another embodiment of the present invention.

Hereinafter, embodiments of the present invention will be described with reference to the drawings. The description will cover a case where the present invention is applied to a scooter type motorcycle. It is noted that the terms front and rear, right and left, up and down as used in these embodiments are determined from the rider's position when the rider sits on a seat of a motorcycle, facing toward a handlebar.

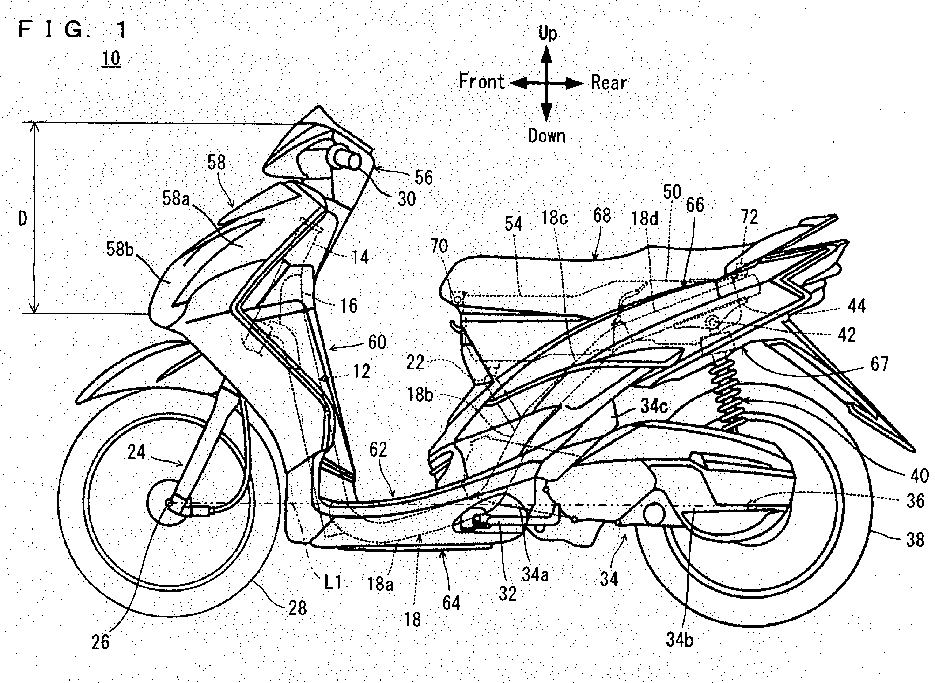

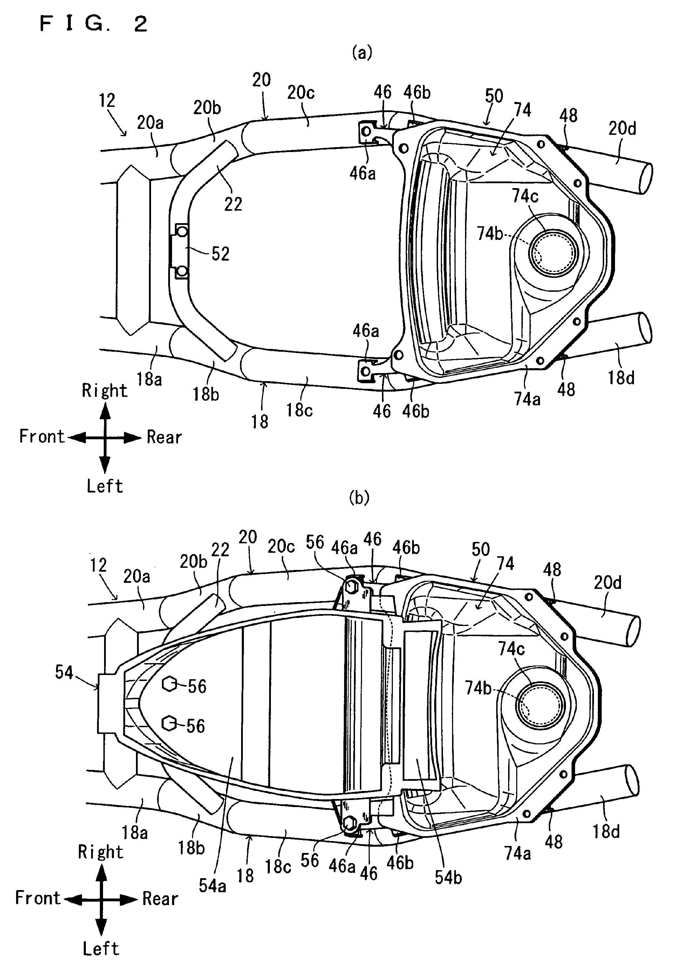

Fig. 1 is a side view of a motorcycle 10 according to an embodiment of the present invention. Fig. 2 is a plan view showing a rear portion of a motorcycle frame 12 of the motorcycle 10: Fig. 2 (a) shows a state of the motorcycle frame 12 where a fuel tank 50 to be described later is attached whereas Fig. 2 (b) shows a state of the motorcycle frame 12 where the fuel tank 50 and a storage box 54 to be described later are attached.

Referring to Fig. 1, the motorcycle 10 includes a motorcycle frame 12. The motorcycle frame 12 includes a head pipe 14, a main frame 16, a pair of left and right side frames 18, 20 (see Fig. 2) disposed on respective sides, and a cross pipe 22 provided to connect the side frames 18, 20 with each other.

The head pipe 14 is at a front end portion, and at a lateral center, of the motorcycle frame 12. The main frame 16 extends from the head pipe 14 in a downward and slightly rearward direction. Each of the side frames 18, 20 is substantially cylindrical. The side frame 18 includes a first portion 18a which extends from a lower end portion of the main frame 16 substantially horizontally in a rearward direction; a second portion 18b which extends from a rear end portion of the first portion 18a obliquely in an upward and rearward direction; a third portion 18c which bends at a rear end of the second portion 18b toward the rear and then extends obliquely in an upward and rearward direction; and a fourth portion 18d which bends at a rear end of the third portion 18c toward the rear and then extends obliquely in an upward and rearward direction. Referring to Fig. 2, the side frame 20 has essentially the same shape as the side frame 18, and includes a first portion 20a, a second portion 20b, a third portion 20c, and a fourth portion 20d, like the side frame 18 includes the first portion 18a through the fourth portion 18d. The fourth portion 18d and the fourth portion 20d each extend from front to rear while coming more inward as they extend. Therefore, the fourth portion 18d and the fourth portion 20d have a decreasing distance between the two as they extend rearward.

Referring to Fig. 1 and Fig. 2, the cross pipe 22 has its one end portion connected with an upper end portion of the second portion 18b of the side frame 18 whereas the cross pipe 22 has its other end portion connected with an upper end portion of the second portion 20b of the side frame 20.

Referring to Fig. 1, the front fork 24 is supported by the head pipe 14 steerably in left and right directions. The front fork 24 has a lower end portion, which supports a front wheel 28 rotatably via a wheel shaft 26. The front fork 24 has its upper end portion provided with a handlebar 30.

A side stand 32 is attached to the first portion 18a of the side frame 18. The side stand 32 supports the motorcycle 10 in a way that the motorcycle 10 is tilted slightly in a leftward direction. An engine unit 34 is installed on the second portions 18b, 20b of the pair of side frames 18, 20, and extends rearward. The engine unit 34 is supported by the side frames 18, 20 via an unillustrated pivot shaft so that it is pivotable in the up-down direction. Specifically, the engine unit 34 is a unit-swing-type engine unit.

The engine unit 34 includes an engine 34a, a transmission case 34b, and an air cleaner 34c. The transmission case 34b houses a transmission mechanism (e.g. V-belt powered infinite variable-speed drive) for transmitting power from the engine 34a to a rear wheel 38 which is to be described later. The air cleaner 34c cleans air before it is supplied to the engine 34a. It should be noted here that Fig. 1 shows only part of the air cleaner 34c to avoid complication in the drawing.

The transmission case 34b has a rear end portion, which supports the rear wheel 38 rotatably via a wheel shaft 36. Thus, the engine unit 34 and the rear wheel 38 are supported by the side frames 18, 20 pivotably in the up-down direction. In the motorcycle 10, the engine unit 34 and the rear wheel 38 pivot integrally with each other in the up-down direction. The rear wheel 38 and the front wheel 28 may be provided by 17-inch diameter or 18-inch diameter wheels.

At a position higher than the wheel shaft 36 in the rear end portion of the transmission case 34b, a lower end portion of the suspension 40 is attached pivotably via an unillustrated support shaft. The suspension 40 has an upper end portion, which is supported pivotably by the fourth portion 18d of the side frame 18 via a support shaft 42 and a bracket 44. The bracket 44 is welded to the fourth portion 18d for example. The support shaft 42 is fixed to the bracket 44 with fasteners such as bolts, for example.

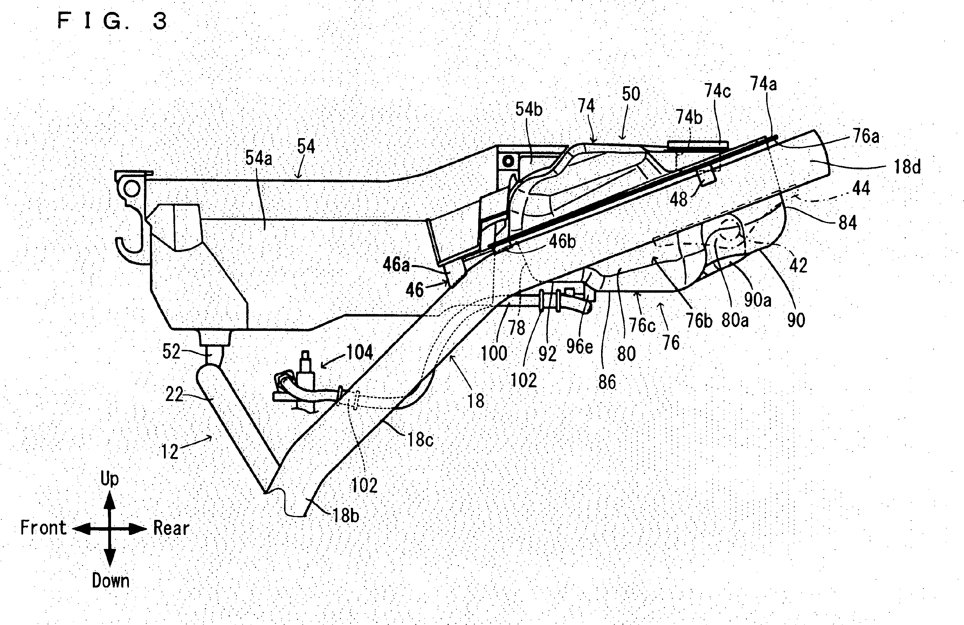

Fig. 3 is a side view showing a rear portion of the motorcycle frame 12. Referring to Fig. 2 and Fig. 3, the motorcycle frame 12 has a rear portion provided with a pair of brackets 46 and a pair of brackets 48. Specifically, the pair of brackets 46 extend from respective rear end portions of the third portions 18c, 20c of the side frames 18, 20 to front end portions of the fourth portions 18d, 20d whereas the pair of brackets 48 are provided in the fourth portion 18d, 20d, at more rearward positions than the brackets 46.

Each bracket 46 has a front end portion provided with a first mounting portion 46a, and a rear end portion provided with a second mounting portion 46b. Each of the first mounting portions 46a is welded for example, to a corresponding one of the third portions 18c, 20c whereas each of the second mounting portions 46b is welded for example, to a corresponding one of the fourth portions 18d, 20d. Each bracket 48 is welded for example, to a corresponding one of the fourth portions 18d, 20d.

The second mounting portions 46b and the brackets 48 support a fuel tank 50. The fuel tank 50 is fixed to the second mounting portions 46b and the brackets 48 with fasteners such as bolts and nuts (not illustrated), for example. Thus, the fuel tank 50 is supported by the pair of side frames 18, 20 above the rear wheel 38 (see Fig. 1). The fuel tank 50 has a decreasing width in the left-right direction, as it is measured at a more rearward position. The fuel tank 50 will be described later in more detail.

Referring to Fig. 2 and Fig. 3, a bracket 52 is provided to extend upward from a center portion of the cross pipe 22. The bracket 52 is welded to the cross pipe 22 for example. Referring to Fig. 2 (b) and Fig. 3, the storage box 54 is supported ahead of the fuel tank 50, by the bracket 52 and the pair of first mounting portions 46a. The storage box 54 is fixed to the bracket 52 and the first mounting portions 46a, with a plurality of fasteners 56 (see Fig. 2 (b) ) such as bolts and nuts. Thus, the storage box 54 is supported by the pair of side frames 18, 20 via the bracket 52, the cross pipe 22 and the first mounting portions 46a.

Referring to Fig. 2 (b) and Fig. 3, the storage box 54 includes a first storage portion 54a and a second storage portion 54b. The first storage portion 54a extends rearward from a front end portion of the storage box 54 while expanding in the left-right direction. The first storage portion 54a is for storage of relatively large items such as a helmet, for example. The second storage portion 54b is provided at a rear end portion of the storage box 54, so as to be above a front end portion of the fuel tank 50. The second storage portion 54b has a smaller capacity than the first storage portion 54a. The second storage portion 54b is for storage of relatively smaller items such as tools.

Referring to Fig. 1, the handlebar 30 is covered by a handle cover 56. The head pipe 14 and the main frame 16 are covered by a front cover portion 58 from ahead. The front cover portion 58 includes a front cover 58a and a head light 58b provided at a front end portion of the front cover 58a. The front cover portion 58 has a substantially middle portion in terms of the up-down direction, which is protruded in the forward direction. The head pipe 14 and the main frame 16 are covered by a leg shield 60 from rear. It should be noted here that a distance D in the up-down direction between an upper end of the handle cover 56 and a front end of the front cover portion 58 (i.e. a front end of the head light 58b in the present embodiment) is smaller than the diameter of the front wheel 28.

For the rider to rest the rider's feet, a foot board 62 extends rearward from a lower end portion of the front cover 58a and the leg shield 60, covering the first portions 18a, 20a from sides (from the left and right directions) and from above. At least part of the foot board 62 is lower than a straight line L1 which connects the wheel shaft 26 and the wheel shaft 36 with each other. The first portions 18a, 20a is covered by an under cover 64 from below. A side cover 66 extends from a rear portion of the foot board 62 obliquely in an upward and rearward direction. The side cover 66 covers the second portions 18b, 20b, the third portions 18c, 20c and the fourth portions 18d, 20d of the pair of side frames 18, 20 and the cross pipe 22 from sides (from the left and right directions). In a plan view, the fuel tank 50 and the storage box 54 are inside the side cover 66. It should be noted here that in a side view, the side cover 66 does not overlap the rear wheel 38.

A lower cover 67 covers the pair of fourth portions 18d, 20d and the fuel tank 50 from below. The lower cover 67 has a central portion (not illustrated) in terms of the left-right direction, which is curved to make an upwardly convex shape, following the shape of the rear wheel 38.

A riding seat 68 (hereinafter simply called seat 68) covers the fuel tank 50 and the storage box 54 from above. The seat 68 has its front end portion pivotably secured to a front end portion of the storage box 54 via a support shaft 70. Thus, the seat 68 is pivotable in the up-down direction via the support shaft 70. Namely, the seat 68 is openable/closable.

A seat locking mechanism 72 is provided behind the fuel tank 50 for fixing a rear end portion of the seat 68. The seat 68 which is locked by the seat locking mechanism 72 can be unlocked when, for example, the rider operates a main switch (not illustrated) of the motorcycle 10. Then, the seat 68 is openable.

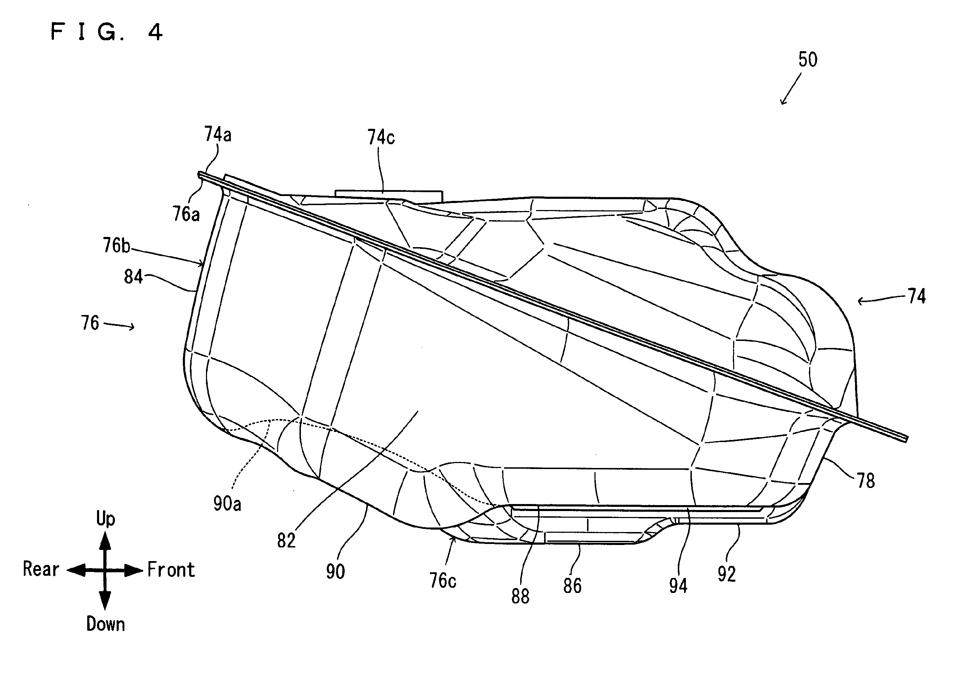

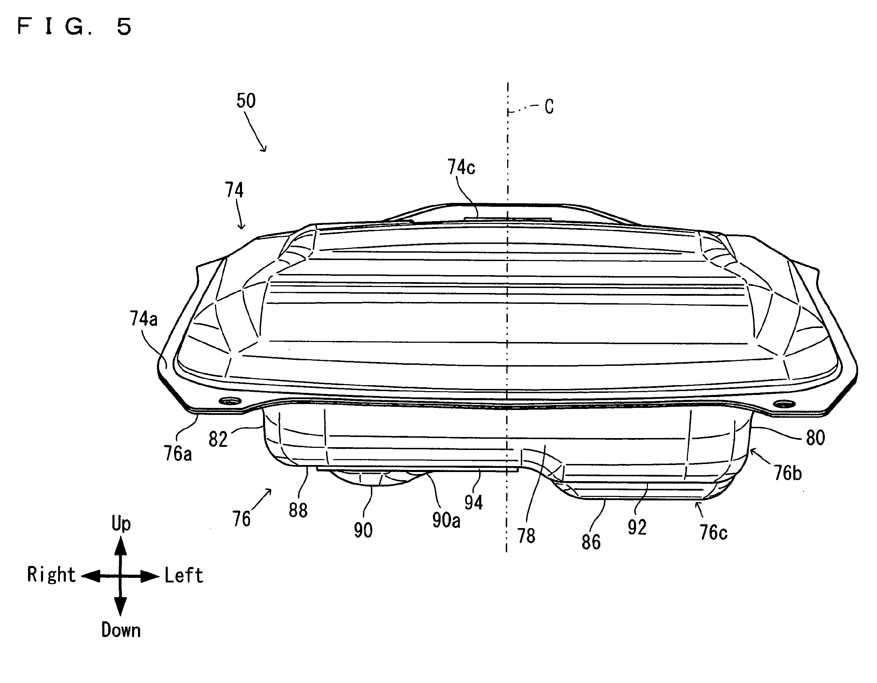

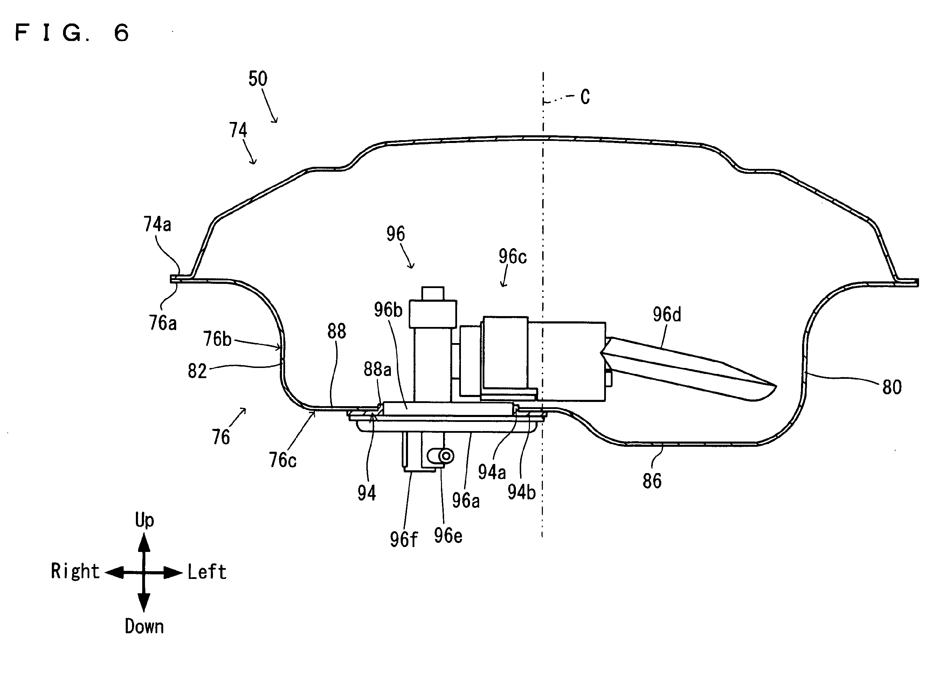

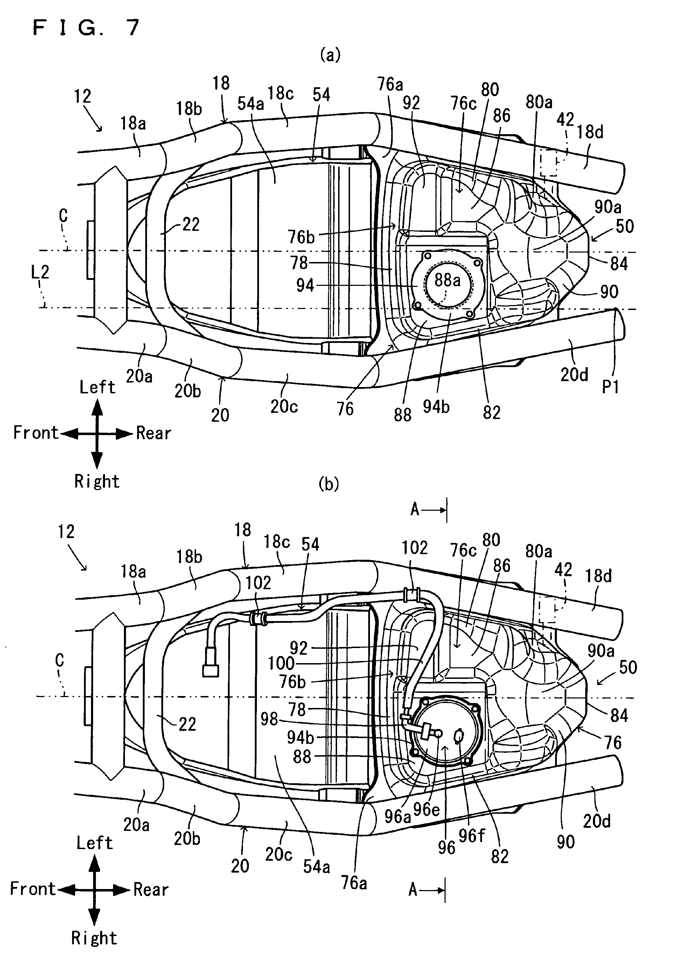

Fig. 4 is a right side view of the fuel tank 50; Fig. 5 is a front view of the fuel tank 50; and Fig. 6 is an illustrative end view of the fuel tank 50. Also, Fig. 7 is a bottom view which shows a rear portion of the motorcycle frame 12, the fuel tank 50 and the storage box 54; Fig. 7 (a) shows a state where the fuel tank 50 does not have a pump unit 96 attached whereas Fig. 7 (b) shows a state where the fuel tank 50 has the pump unit 96 attached. The pump unit 96 will be described later. It should be noted here that

Fig. 6 shows an end surface of the fuel tank 50 obtained by cutting in lines A-A in Fig. 7 (b). Also, Fig. 5 through Fig. 7 show a centerline of the fuel tank 50 in terms of the left-right direction, using an alternate long and two short dashes line C. In the motorcycle 10, the centerline of the fuel tank 50 in terms of the left-right direction is substantially on a centerline of the motorcycle 10 in terms of the left-right direction. In the description hereinafter, the centerline of the fuel tank 50 in terms of the left-right direction will be called centerline C. Also, Fig. 7 (a) shows an alternate long and two short dashes line L2 which represents a straight line drawn in the fore-aft direction of the motorcycle 10 to pass through the inner most position P1 of the rear end of the side frame 20 (the fourth portion 20d) . The straight line L2 is parallel to a centerline of the motorcycle 10, extending in the fore-aft direction.

Referring to Fig. 3, the fuel tank 50 includes a tank upper portion 74 which is provided above the fourth portions 18d, 20d of the side frames 18, 20; and a tank lower portion 76 which extends downward between the fourth portions 18d, 20d, to a position lower than the fourth portions 18d, 20d. The tank upper portion 74 has a downward sinking front end portion to avoid the second storage portion 54b of the storage box 54. Referring to Fig. 3 through Fig. 6, the tank upper portion 74 includes an outward-extending flange portion 74a around its edge, whereas the tank lower portion 76 includes an outward-extending flange portion 76a around its edge. The flange portion 74a follows the side frames 18, 20 in a side view. Likewise, the flange portion 76a follows the side frames 18, 20 in a side view. In the present embodiment, the flange portion 74a and the flange portion 76a extend from front to rear on an upward inclination, along the side frames 18, 20.

The flange portion 74a and the flange portion 76a have substantially the same outer edge perimeters. The flange portion 74a and the flange portion 76a are fixed to each other by welding for example. The flange portion 74a and the flange portion 76a are fixed to the brackets 46 (see Fig. 2) and the brackets 48 (see Fig. 2).

Referring to Fig. 2 and Fig. 3, the tank upper portion 74 has a rear portion provided with an upward opening fuel supply opening 74b, and a cap 74c is provided to close the fuel supply opening 74b.

Referring to Fig. 4 through Fig. 6, the tank lower portion 76 further includes a side wall portion 76b extending downward from the flange portion 76a; and a bottom portion 76c which continues to a lower end portion of the side wall portion 76b.

Referring to Fig. 3, Fig. 4 and Fig. 7, the side wall portion 76b includes a front wall portion 78 which extends in the left-right direction as well as extending in a downward direction while slanting slightly in a rearward direction; a left side wall portion 80(see Fig. 3 and Fig. 7) which extends from a left end portion of the front wall portion 78 in a rearward direction while slanting inward (toward the centerline C) ; a right side-wall portion 82 (see Fig. 4 and Fig. 7) which extends from a right end portion of the front wall portion 78 in a rearward direction while slanting inward (toward the centerline C) ; and a rear wall portion 84 which extends in the left-right direction as well as extending in a downward direction while slanting slightly in a rearward direction. Referring to Fig. 3 and Fig. 7, the left side-wall portion 80 includes a curved portion 80a. The curved portion 80a is a rear end portion of the left side-wall portion 80, and is curved inward to make a recess. The curved portion 80a is curved to avoid the suspension 40 (see Fig. 1) and the support shaft 42.

Referring to Fig. 3 through Fig. 7, the bottom portion 76c includes a first bottom portion 86, a second bottom portion 88 (see Fig. 4 through Fig. 7), a third bottom portion 90 (see Fig. 3 through Fig. 5, and Fig. 7) and a fourth bottom portion 92 (see Fig. 3 through Fig. 5, and Fig. 7).

Referring to Fig. 3 through Fig. 7, the first bottom portion 86 is flat and substantially horizontal. Referring to Fig. 3 through Fig. 5, the first bottom portion 86 represents the lowest position in the fuel tank 50. Referring to Fig. 5 through Fig. 7, the first bottom portion 86 is off the centerline C of the fuel tank 50, on one side (on the left side in the present embodiment).

Referring to Fig. 4 through Fig. 7, the second bottom portion 88 is flat and substantially horizontal. Referring to Fig. 4 through Fig. 6, the second bottom portion 88 is higher than the first bottom portion 86. Referring to Fig. 5 through Fig. 7, the second bottom portion 88 is on the other side (on the right side in the present embodiment) of the first bottom portion 86. The second bottom portion 88 is on the centerline C in terms of the left-right direction of the fuel tank 50. More specifically, the second bottom portion 88 extends from one side (left side in the present embodiment) of the centerline C to the other side (right side in the present embodiment) of the centerline C. Referring to Fig. 7 (a), the second bottom portion 88 is in the front portion of the fuel tank 50 which represents a wider portion in the fuel tank 50. In the present embodiment, the second bottom portion 88 overlaps the straight line L2 which passes through the inner most position P1 of the rear end of the side frame 20 (the fourth portion 20d) when viewed from below. Referring to Fig. 6 and Fig. 7 (a), the second bottom portion 88 has a circular opening 88a in its substantially central portion.

Referring to Fig. 3, Fig. 4 and Fig. 7, the third bottom portion 90 is behind the first bottom portion 86 and the second bottom portion 88, and extends from front to rear on an upward slant. Referring to Fig. 3 through Fig. 5, and Fig. 7, the third bottom portion 90 has an upward recessing recess 90a in its central portion in terms of the left-right direction. The recess 90a follows the shape of the lower cover 67 (see Fig. 1) (the shape of the rear wheel 38), curving like an arc when viewed from front.

Referring to Fig. 5, the second bottom portion 88 overlaps the recess 90a of the third bottom portion 90 in a front view. Specifically, part of the second bottom portion 88 is at a position identified by hypothetically extending the recess 90a in a forward direction of the recess 90a. Referring to Fig. 4 and Fig. 5, the second bottom portion 88 is higher than a lower end of the third bottom portion 90.

Referring to Fig. 3 through Fig. 5, the fourth bottom portion 92 is flat and substantially horizontal. Referring to Fig. 4, Fig. 5 and Fig. 7, the fourth bottom portion 92 is ahead of the first bottom portion 86 and on one side (on the left side in the present embodiment) of the second bottom portion 88. Referring to Fig. 4 and Fig. 5, the fourth bottom portion 92 is higher than the first bottom portion 86 and lower than the second bottom portion 88.

Referring to Fig. 6 and Fig. 7 (a), the second bottom portion 88 has a lower surface provided with a connecting member 94 which covers the outer edge of the opening 88a. Referring to Fig. 6, the connecting member 94 includes a cylindrical tube portion 94a which is inserted into the opening 88a; and a flange portion 94b which extends outward from a lower end portion of the tube portion 94a. The flange portion 94b is fixed on the bottom surface of the second bottom portion 88. A sealing member (not illustrated) such as an O ring is provided between the second bottom portion 88 and the connecting member 94. Thus, fuel in the fuel tank 50 is prevented from leaking out from between the second bottom portion 88 and the connecting member 94. Referring to Fig. 7 (a), the connecting member 94 is in the front portion of the fuel tank 50 which represents a wider portion in the fuel tank 50. In the present embodiment, the connecting member 94 overlaps the centerline C of the fuel tank 50 in terms of the left-right direction when viewed from below. Also, the connecting member 94 overlaps the straight line L2 which passes through the inner most position P1 of the rear end of the side frame 20 (the fourth portion 20d) when viewed from below.

Referring to Fig. 6 and Fig. 7 (b), the pump unit 96 is attached to the flange portion 94b. Referring to Fig. 6, the pump unit 96 includes a substantially disc-shaped flange portion 96a which is fixed to the flange portion 94b; a substantially cylindrical pad portion 96b which extends upward from the flange portion 96a to pass through the tube portion 94a; a pump main body 96c which is provided on the pad portion 96b; a sucking portion 96d which extends toward one side (toward the left side in the present embodiment) from the pump main body 96c and is substantially rectangular when viewed in a plan view; a discharging portion 96e which extends downward from the flange portion 96a and is a substantially L-shaped; and a connector portion 96f which extends downward from the flange portion 96a. A sealing member (not illustrated) such as an O ring is provided between the connecting member 94 and the pump unit 96. Thus, fuel in the fuel tank 50 is prevented from leading out from between the connecting member 94 and the pump unit 96.

The sucking portion 96d is provided on one side (on the left side in the present embodiment) of the second bottom portion 88. More specifically, the sucking portion 96d is above the first bottom portion 86. The discharging portion 96e has a lower end which is lower than the lower end (the lower surface of the first bottom portion 86 in the present embodiment) of the fuel tank 50.

The discharging portion 96e passes through the flange portion 96a and through the pad portion 96b, communicating with the pump main body 96c. The pump main body 96c includes an unillustrated power drive (an electric motor for example) to suck fuel in the fuel tank 50 from the sucking portion 96d and discharge it from the discharging portion 96e. The power drive in the pump main body 96c receives electricity which is generated by a generator (not illustrated) provided in the engine 34a (see Fig. 1), via the connector portion 96f. Thus, the pump main body 96c is driven.

Referring to Fig. 7 (b), a fuel hose 100 is connected to the discharging portion 96e via a substantially L-shaped connecting pipe 98. Referring to Fig. 3 and Fig. 7 (b), the fuel hose 100 is provided with a plurality (two in the present embodiment) of generally cylindrical holding members 102. The holding members 102 are supported by the motorcycle frame 12 via unillustrated support members. This makes it possible to dispose the fuel hose 100 at a desired position.

Referring to Fig. 3 and Fig. 7 (b), the fuel hose 100 extends in one direction (to the left in the present embodiment) from the discharging portion 96e (the connecting pipe 98), passing under the fourth bottom portion 92 of the fuel tank 50, and then goes obliquely downward along the side frame 18. Referring to Fig. 3, the fuel hose 100 has an end which is connected to a fuel injector 104 for supplying fuel to the engine 34a (see Fig. 1) . Fuel in the fuel tank 50 is discharged by the pump unit 96 and supplied to the fuel injector 104 via the fuel hose 100. The fuel injector 104 injects the fuel supplied from the fuel tank 50 into the engine 34a.

In the motorcycle 10, the wheel shaft 26 serves as a rotation shaft for the front wheel while the wheel shaft 36 serves as a rotation shaft for the rear wheel.

Hereinafter, functions and advantages of the motorcycle 10 will be described.

In the motorcycle 10, the discharging portion 96e of the pump unit 96 protrudes downward from the bottom portion 76c of the fuel tank 50. This makes it possible to connect the fuel hose 100 to the discharging portion 96e of the pump unit 96 under the fuel tank 50 for supplying fuel to the engine 34a (the fuel injector 104) which is disposed at a lower position than the fuel tank 50. In this case, the fuel hose 100 need not be extended from above the fuel tank 50 to below the fuel tank 50, and therefore there is no need for formation of a cutout in the fuel tank 50 or in the storage box 54 for allowing the fuel hose 100 to pass through. The arrangement therefore eliminates decrease in the capacities of the fuel tank 50 and of the storage box 54.

Also, the bottom portion 76c of the fuel tank 50 includes the first bottom portion 86, the second bottom portion 88 and the third bottom portion 90; the third bottom portion 90 is disposed behind the first bottom portion 86 and the second bottom portion 88 to extend from front to rear on an upward slant. In addition, the forward recessing recess 90a is provided at a central portion of the third bottom portion 90 in terms of the left-right direction. As understood, the fuel tank 50 of the motorcycle 10 has a recess 90a in the bottom portion 76c like the conventional fuel tank, making possible to provide a sufficient clearance between the fuel tank 50 and the rear wheel 38 without increasing the height of the seat 68. Thus, it is possible to keep the dimension of the motorcycle 10 in the up-down direction at the same level as of conventional motorcycles.

Also, the second bottom portion 88 is at a higher position than the first bottom portion 86 on the said other side (on the right side in the present embodiment) of the first bottom portion 86. Further, the second bottom portion 88 extends into the said one side (the left side in the present embodiment) beyond the centerline C in terms of the left-right direction of the fuel tank 50. In this case, it is possible to dispose part of the second bottom portion 88 which is higher than the first bottom portion 86, above the rear wheel 38. This makes it possible to provide a sufficient clearance between the bottom portion 76c and the rear wheel 38. Also, the second bottom portion 88 is where the pump unit 96 is installed. Therefore, part of the second bottom portion 88 is used to provide a sufficient clearance between the fuel tank 50 and the rear wheel 38, as well as to install the pump unit 96 to the fuel tank 50. In other words, the pump unit 96 can be installed by utilizing the portion which is made to provide the clearance, within a limitation that the installation should still make it possible to provide a clearance necessary between the second bottom portion 88 and the rear wheel 38. As understood, according to the motorcycle 10, it is possible to provide an area on the bottom portion 76c of the fuel tank 50 for installation of the pump unit 96, by utilizing a portion for providing a clearance between the fuel tank 50 and the rear wheel 38. Thus, it is possible to provide a sufficient amount of area on the bottom portion 76c of the fuel tank 50 for installation of the pump unit 96 while reducing decrease in the capacity of the fuel tank 50.

As a result of the above, it is possible to ensure capacities of the fuel tank 50 and the storage box 54 while reducing increase in the height of the seat 68.

In a side view, the discharging portion 96e of the pump unit 96 has its lower end located at a lower position than a lower end of the fuel tank 50. In the motorcycle 10, the pump unit 96 is attached at a sufficiently low position on the fuel tank 50. In other words, the second bottom portion 88 is provided at a sufficiently low position on the fuel tank 50. In this case, it is possible to give the fuel tank 50 a sufficient capacity since the fuel tank 50 can have an increased dimension in the up-down direction on the second bottom portion 88.

The fuel tank 50 has a decreasing width in terms of the left-right direction, as it is measured at a more rearward position. In this case, it is possible to decrease a distance between the end portions of the side frames 18, 20 at a rear portion of the motorcycle 10. This helps reduce increase in the width of the rear portion of the motorcycle 10.

Since the fuel hose 100 passes under the bottom portion 76c of the fuel tank 50 and extends to one side of the motorcycle 10, there is no need for providing means (such as a cutout) at a rear end portion of the storage box 54 for the fuel hose 100 to pass through. This makes it possible to provide a sufficient capacity of the storage box 54.

In the motorcycle 10, the fourth bottom portion 92 is provided in the bottom portion 76c of the fuel tank 50 in order to provide a region for the fuel hose 100 to pass under the fuel tank 50. Note here that the fourth bottom portion 92 is at a position higher than the first bottom portion 86 and is lower than the second bottom portion 88. In this case, it is possible to provide a region under the fourth bottom portion 92 for the fuel hose 100 to pass while preventing the fourth bottom portion 92 from being too high in its position. This makes it possible to sufficiently reduce decrease in the capacity of the fuel tank 50.

The sucking portion 96d of the pump unit 96 is above the first bottom portion 86. Since the first bottom portion 86 is the lowest portion of the fuel tank 50, fuel in the fuel tank 50 tends to gather on the first bottom portion 86 even if the amount of fuel in the fuel tank 50 is small. Therefore, by disposing the sucking portion 96d above the first bottom portion 86, it becomes possible to suck the fuel in the fuel tank 50 efficiently with the pump unit 96 even if the amount of fuel in the fuel tank 50 is small.

The sucking portion 96d of the pump unit 96 is provided in the fuel tank 50 and on one side (left side in the present embodiment) of the fuel tank 50 off the centerline C. Therefore, the arrangement makes it possible to suck fuel sufficiently at the sucking portion 96d even when the fuel is shifted on one side (the left side) in the fuel tank 50 when the motorcycle 10 is supported by the side stand 32.

According to the motorcycle 10, a rear end portion (the second storage portion 54b) of the storage box 54 is disposed above a front end portion of the fuel tank 50. Therefore, it is possible to shorten the length of from the front end portion of the storage box 54 to the rear end portion of the fuel tank 50. This makes it easy to make the motorcycle 10 compact.

According to the motorcycle 10, the seat locking mechanism 72 is provided behind the fuel tank 50, so it is possible to dispose the fuel tank 50 at a more forward position. This makes it possible to provide the fuel tank 50 and the storage box 54 closely with each other, thereby shortening the length of the motorcycle 10 easily, in terms of the fore-aft direction.

In the embodiment described above, description was made that the side frames 18, 20 are substantially cylindrical. However, the shape of the pair of side frames is not limited to the above example. For example, each in the pair of side frames may be substantially tubular with a polygonal cross-section. Also, one of the side frames may be substantially tubular with a circular cross-section while the other being substantially tubular with a polygonal cross-section. Also, the pair of side frames may be substantially columnar with a circular cross-section, or substantially columnar with a polygonal cross-section. Also, the side frames may be symmetric with each other in terms of the left-right direction, but it is not necessary to be so.

In the embodiment described above, each of the first bottom portion 86, the second bottom portion 88 and the fourth bottom portion 92 is flat and substantially horizontal. However, the shape of the first bottom portion, the second bottom portion and the fourth bottom portion is not limited by those described in the above example. For example, the first bottom portion, the second bottom portion or the fourth bottom portion may be inclined. Also, the first bottom portion, the second bottom portion or the fourth bottom portion may have a hubbly surface. Further, the first bottom portion, the second bottom portion or the fourth bottom portion may be curved.

In the embodiment described above, the fuel tank 50 was described to have the fourth bottom portion 92. However, it is not necessary for the fuel tank to have the fourth bottom portion. In this case, it is possible to further increase the capacity of the fuel tank by extending the first bottom portion to replace the fourth bottom portion 92 of the fuel tank 50.

In the embodiment described above, the storage box 54 was described to have the second storage portion 54b. However, it is not necessary for the storage box to have the second storage portion. In this case, the front end portion of the tank upper portion in the fuel tank need not have a downward sinking shape.

In the embodiment described above, the front cover portion 58 was described to have the head light 58b. However, the head light need not be provided in the front cover portion.

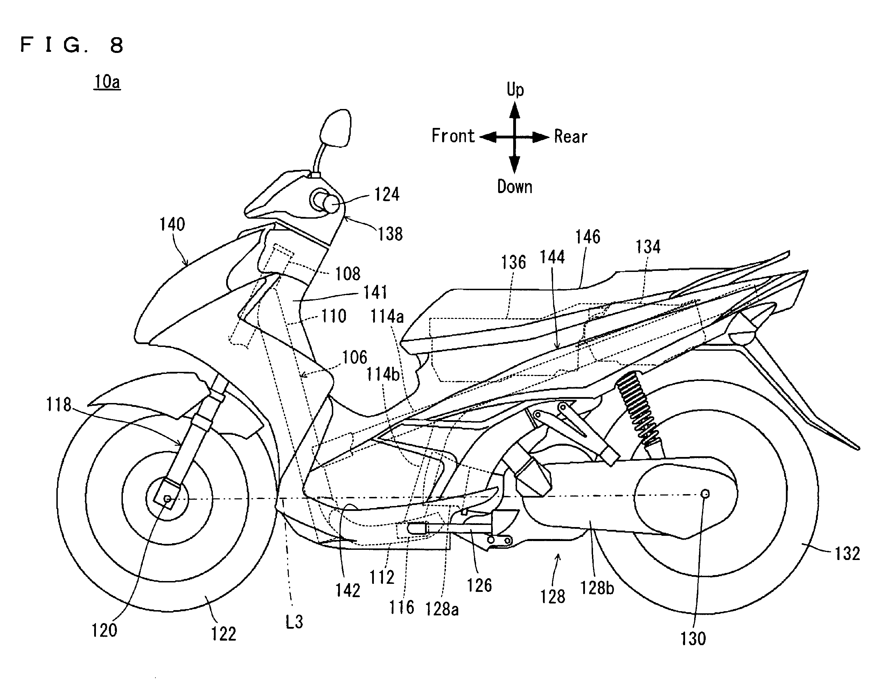

The above description has covered a case where the present invention is applied to a scooter-type motorcycle 10. However, the present invention is also applicable to an underbone-type motorcycle 10a as shown in Fig. 8.

Referring to Fig. 8, the motorcycle 10a includes a motorcycle frame 106. The motorcycle frame 106 includes a head pipe 108; a main frame 110; a pair of lower frames 112 disposed on the left and the right sides; and a pair of side frames 114a, 114b.

The head pipe 108 is at a front end portion of the motorcycle frame 106, at a lateral center thereof. The main frame 110 extends from the head pipe 108 in a downward and slightly rearward direction. The lower frames 112 extend rearward from a lower end portion of the main frame 110 while being increasingly apart from each other in the left-right direction. A cross member 116 extends in the left-right direction, to connect the pair of lower frames 112 with each other at their rear end portions.

The side frame 114a extends from the main frame 110, at a higher position than the lower frames 112, obliquely in a rearward and upward direction. The side frame 114a is on a more left side than a lateral (left-right) centerline of the motorcycle 10a. The side frame 114b extends from the cross member 116 obliquely in an upward and slightly rearward direction, then bends rearward and extends as does the side frame 114a, obliquely in a rearward and upward direction. The side frame 114b is on a more right side than the lateral (left-right) centerline of the motorcycle 10a.

The front fork 118 is supported by the head pipe 108 steerably in the left-right direction. The front fork 118 has a lower end portion, which supports a front wheel 122 rotatably via a wheel shaft 120. The front fork 118 has its upper end portion provided with a handlebar 124.

A side stand 126 is attached to one of the lower frames 112 (which is on the left side in the present embodiment) . The side stand 126 supports the motorcycle 10a in a way that the motorcycle 10a is tilted slightly in a leftward direction.

An engine unit 128 is installed on a rear end portion of the pair of lower frames 112, and extends rearward. The engine unit 128 is supported by the lower frames 112 via an unillustrated pivot shaft so that it is pivotable in the up-down direction. Specifically, the engine unit 128 is a unit-swing-type engine unit. The engine unit 128 includes an engine 128a and a transmission case 128b. The transmission case 128b houses a transmission mechanism (e.g. V-belt powered infinite variable-speed drive) for transmitting power from the engine 128a to a rear wheel 132 which is to be described later.

The transmission case 128b has a rear end portion, which supports the rear wheel 132 rotatably via a wheel shaft 130. Thus, the engine unit 128 and the rear wheel 132 are supported by the lower frames 112, pivotably in the up-down direction. In the motorcycle 10a, the engine unit 128 and the rear wheel 132 pivot integrally with each other in the up-down direction. The rear wheel 132 and the front wheel 122 may be provided by the same rear wheel 38 and front wheel 28 as in the motorcycle 10.

A fuel tank 134 and a storage box 136 are supported by the side frames 114a, 114b. The fuel tank 134 has a first bottom portion, a second bottom portion, a third bottom portion and a fourth bottom portion in its bottom, just like the first bottom portion 86, the second bottom portion 88, the third bottom portion 90 and the fourth bottom portion 92 in the fuel tank 50 (see Fig. 7). It should be noted here that sizes, etc. of the first bottom portion, the second bottom portion, the third bottom portion and the fourth bottom portion are changed appropriately in accordance with the shape of relevant components in the motorcycle 10a. The storage box 136 has its rear end portion disposed above a front end portion of the fuel tank 134.

It should be noted here that although not illustrated, the fuel tank 134 has a pump unit 96 (see Fig. 6) and a fuel hose 100 (see Fig. 3 ) attached thereto, as does the fuel tank 50 in the motorcycle 10. Also, the motorcycle 10a includes a fuel injector 104 (see Fig. 3) as does the motorcycle 10.

The handlebar 124 is covered by a handlebar cover 138. The head pipe 108 and the main frame 110 are covered by a front cover portion 140 from ahead. A distance in the up-down direction between an upper end of the handle cover 138 and a front end of the front cover portion 140 is smaller than the diameter of the front wheel 122. The head pipe 108 and the main frame 110 are covered by a leg shield 141 from rear.

For the rider to rest the rider's feet, a foot board 142 extends rearward from a lower end portion of the front cover portion 140a and the leg shield 141 to cover the pair of lower frames 112 from sides (from the left and right directions). At least part of the foot board 142 is lower than a straight line L3 which connects the wheel shaft 120 and the wheel shaft 130 with each other.

A side cover 144 extends from the foot board 142 obliquely in an upward and rearward direction. The side frames 114a, 114b are covered by the side cover 144 from sides (from the left and the right directions). In a plan view, the fuel tank 134 and the storage box 136 are inside the side cover 144.

A riding seat 146 (hereinafter simply called seat 146) covers the fuel tank 134 and the storage box 136 from above. The seat 146 has its front end portion pivotably secured to a front end portion of the storage box 136 via a support shaft (not illustrated). Thus, the seat 146 is openable/closable. It should be noted here that although not illustrated, a seat locking mechanism similar to the seat locking mechanism 72 (see Fig. 1) in the motorcycle 10 is provided behind the fuel tank 134.

In the motorcycle 10a, the wheel shaft 120 serves as a rotation shaft for the front wheel while the wheel shaft 130 serves as a rotation shaft for the rear wheel.

The underbone-type motorcycle 10a as described above provides the same advantages as the motorcycle 10.

It should be noted here that the side frames 114a, 114b may be substantially tubular with a circular cross-section or substantially tubular with a polygonal cross-section. Also, one of the side frames 114a, 114b may be substantially tubular with a circular cross-section, while the other being substantially tubular with a polygonal cross-section. Also, the pair of side frames 114a, 114b may be substantially columnar with a circular cross-section, or with a polygonal cross-section.

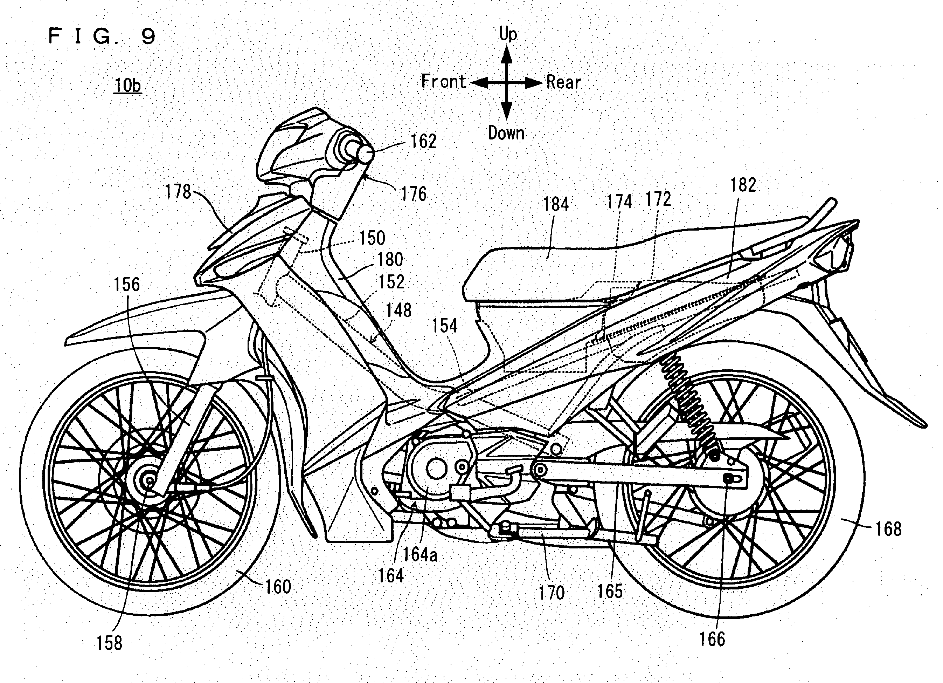

Thus far, description has covered cases where the present invention is applied to motorcycles 10, 10a which include swing-type engine units 34, 128 respectively. However, the present invention is also applicable to a motorcycle 10b as shown in Fig. 9.

Referring to Fig. 9, the motorcycle 10b includes a motorcycle frame 148. The motorcycle frame 148 includes a head pipe 150; a main frame 152; and a pair of side frames 154 disposed on the left and the right sides.

The head pipe 150 is at a front end portion of the motorcycle frame 148, at a lateral center thereof. The main frame 152 extends from the head pipe 150 in a downward and slightly rearward direction. The side frames 154 extend from the main frame 152 obliquely in a rearward and upward direction.

The front fork 156 is supported by the head pipe 150 steerably in the left-right direction. The front fork 156 has a lower end portion, which supports a front wheel 160 rotatably via a wheel shaft 158. The front fork 156 has its upper end portion provided with a handlebar 162.

The main frame 152 supports the engine unit 164 in a suspending manner. The engine unit 164 includes an engine 164a. The engine unit 164 is fixed to the main frame 152. Specifically, the engine unit 164 is a rigid-type engine unit.

At a rear end portion of the engine 164a, a rearward extending rear arm 165 is supported pivotably in the up-down direction. The rear arm 165 has a rear end portion, which supports a rear wheel 168 rotatably via a wheel shaft 166. Thus, the rear arm 165 and the rear wheel 168 are supported by the main frame 152 pivotably in the up-down direction via the engine unit 164. In the motorcycle 10b, the rear arm 165 and the rear wheel 168 pivot integrally with each other in the up-down direction. The rear wheel 168 and the front wheel 160 may be provided by the same rear wheel 38 and front wheel 28 in the motorcycle 10. It should be noted here that the engine unit 164 does not have a transmission case, and the rear wheel 168 is chain driven.

A side stand 170 is provided under the engine unit 164. The side stand 170 supports the motorcycle 10b in a way that the motorcycle 10b is tilted slightly in the leftward direction.

A fuel tank 172 and a storage box 174 are supported by the pair of side frames 154. The fuel tank 172 has a first bottom portion, a second bottom portion, a third bottom portion and a fourth bottom portion in its bottom, just like the first bottom portion 86, the second bottom portion 88, the third bottom portion 90 and the fourth bottom portion 92 in the fuel tank 50 (see Fig. 7). It should be noted here that sizes, etc. of the first bottom portion, the second bottom portion, the third bottom portion and the fourth bottom portion are changed appropriately in accordance with the shape of relevant components in the motorcycle 10b. The storage box 174 has its rear end portion disposed above a front end portion of the fuel tank 172.

It should be noted here that although not illustrated, the fuel tank 172 has a pump unit 96 (see Fig. 6) and a fuel hose 100 (see Fig. 3 ) attached thereto, as does the fuel tank 50 in the motorcycle 10. Also, the motorcycle 10b includes a fuel injector 104 (see Fig. 3) as does the motorcycle 10.

The handlebar 162 is covered by a handlebar cover 176. The head pipe 150 and the main frame 152 are covered by a front cover portion 178 from ahead. The head pipe 150 and the main frame 152 are covered by a leg shield 180 from rear.

A side cover 182 extends from a lower end portion of a leg shield 180 obliquely in an upward and rearward direction. The side frames 154 are covered by the side cover 182 from sides (from the left and right directions). In a plan view, the fuel tank 172 and the storage box 174 are on the inner side of the side cover 182.

A riding seat 184 (hereinafter simply called seat 184) covers the fuel tank 172 and the storage box 174 from above. The seat 184 has its front end portion pivotably secured to a front end portion of the storage box 174 via a support shaft (not illustrated). Thus, the seat 184 is openable/closable. Although not illustrated, a seat locking mechanism similar to the seat locking mechanism 72 (see Fig. 1) in the motorcycle 10 is provided behind the fuel tank 172.

The motorcycle 10b as the above, which includes a rigid-type engine unit 164, also provides the same advantages as provided by the motorcycle 10.

It should be noted here that the side frames 154 may be substantially tubular with a circular cross-section or substantially tubular with a polygonal cross-section. Also, one of the side frames 154 may be substantially tubular with a circular cross-section, with the other being substantially tubular with a polygonal cross-section. Also, the side frames 154 may be substantially columnar with a circular cross-section or with a polygonal cross-section. Also, the side frames may be symmetric with each other with respect to the left-right direction, but it is not necessary to be so.

The present invention is applicable suitably to motorcycles such as the motorcycles 10 through 10b of a type where the side cover and the rear wheel do not overlap each other in a side view, with the side cover having a small width in the up-down direction.

Also, the present invention is applicable suitably to motorcycles such as the motorcycles 10 through 10b which have large-diameter wheels.

The side cover 66 may be formed as a single, generally C-shaped integrated piece, or may include one or more separete pieces for each of the left side of the side frame 18 and the right side of the side frame 20. The same applies to the side covers 144 and 182.

The present invention being thus far described in terms of preferred embodiments, it is obvious that these may be varied in many ways within the scope and the spirit of the present invention. The scope of the present invention is only limited by the accompanied claims.

### LEGEND

| | |
|---|---|
| 10, 10a, 10b | Motorcycles |
| 12, 106, 148 | Motorcycle frames |
| 14, 108, 150 | Head pipes |
| 18, 20, 114a, 114b, 154 | Side frames |
| 24, 118, 156 | Front forks |
| 26, 36, 120, 130, 158, 166 | Wheel shafts |
| 28, 122, 160 | Front wheel |
| 30, 124, 162 | Handlebars |
| 32, 126, 170 | Side stands |
| 34a, 128a, 164a | Engines |
| 38, 132, 168 | Rear wheels |
| 50, 134, 172 | Fuel tanks |
| 54, 136, 174 | Storage boxes |
| 56, 138, 176 | Handle covers |
| 58, 140, 178 | Front cover portions |
| 62, 142 | Foot boards |
| 66, 144, 182 | Side covers |
| 68, 146, 184 | Riding seats |
| 76c | Bottom portion |
| 86 | First bottom portion |
| 88 | Second bottom portion |
| 90 | Third bottom portion |
| 90a | Recess |
| 92 | Fourth bottom portion |
| 96 | Pump unit |
| 96d | Sucking portion |
| 96e | Discharging portion |
| 100 | Fuel hose |
| 104 | Fuel injector |

## Claims

1. A motorcycle (10, 10a, 10b) comprising:
a front wheel (28, 122, 160) and a rear wheel (38, 132, 168);
a pair of side frames (18, 20, 114a, 114b, 154) disposed side by side in a left-right direction to pass above the rear wheel (38, 132, 168);
a storage box (54, 136, 174) supported by the side frames (18, 20, 114a, 114b, 154) inside a side cover (66, 144, 182);
a fuel tank (50, 134, 172) supported by the side frames (18, 20, 114a, 114b, 154) behind the storage box (54, 136, 174) inside the side cover (66, 144, 182);
a riding seat (68, 146, 184) covering the fuel tank (50, 134, 172) and the storage box (54, 136, 174) from above;
an engine (34a, 128a, 164a) provided at a lower position than the fuel tank (50, 134, 172); and
a pump unit (96) having a discharging portion (96e) for discharging fuel;
wherein the fuel tank (50, 134, 172) is above the rear wheel (38, 132, 168), and
a bottom portion (76c) of the fuel tank (50, 134, 172) includes: a first bottom portion (86) provided on one side of the fuel tank's centerline in terms of the left-right direction; a second bottom portion (88) provided on an opposite side of the first bottom portion (86) in terms of the left-right direction; and a third bottom portion (90) provided behind the first bottom portion (86) and the second bottom portion (88), extending from front to rear on an upward inclination;
the second bottom portion (88) is provided at a higher position than the first bottom portion (86) and extending at least to said one side beyond the centerline, and
the third bottom portion (90) having an upward recessing recess (90a) in its center portion in terms of the left-right direction, **characterized by**
the pump unit (96) being attached to the second bottom portion (88) of the fuel tank (50, 134, 172) with the discharging portion (96e) protruding downward from the second bottom portion (88) of the fuel tank (50, 134, 172).

2. The motorcycle (10, 10a, 10b) according to Claim 1, wherein the side cover (66, 144, 182) covers the side frames (18, 20, 114a, 114b, 154) from sides, such that the storage box (54, 136, 174) and fuel tank (50, 134, 172) are supported inside the side cover (66, 144, 182).

3. The motorcycle (10, 10a, 10b) according to Claim 2, wherein the side cover (66, 144, 182) does not overlap the rear wheel (38, 132, 168) in a side view.

4. The motorcycle (10, 10a, 10b) according to one of Claims 1 through 3, wherein the discharging portion (96e) has a lower end at a lower position than a lower end of the fuel tank (50, 134, 172) in a side view.

5. The motorcycle (10, 10a, 10b) according to one of Claims 1 through 4, wherein the fuel tank (50, 134, 172) has a decreasing width in terms of the left-right direction, toward a rear of the fuel tank (50, 134, 172).

6. The motorcycle (10, 10a, 10b) according to one of Claims 1 through 5, wherein the bottom portion (76c) further includes a fourth bottom portion (92) provided at a more forward position than the first bottom portion (86), on one side of the second bottom portion (88), the fourth bottom portion (92) being at a position higher than the first bottom portion (86) but lower than the second bottom portion (88).

7. The motorcycle (10, 10a, 10b) according to one of Claims 1 through 6, further comprising a fuel hose (100) connected to the discharging portion (96e), the fuel hose (100) passing under the bottom portion (76c) toward said one side.

8. The motorcycle (10, 10a, 10b) according to Claim 6, further comprising a fuel hose (100) connected to the discharging portion (96e), the fuel hose (100) extending under the fourth bottom portion (92) to said one side.

9. The motorcycle (10, 10a, 10b) according to one of Claims 1 through 8 , wherein the pump unit (96) further includes a sucking portion (96d) for sucking fuel from inside the fuel tank (50, 134, 172),
the sucking portion (96d) being provided above the first bottom portion (86).

10. The motorcycle (10, 10a, 10b) according to one of Claims 1 through 8, further comprising a side stand (32, 126, 170) for supporting the motorcycle (10, 10a, 10b),
the pump unit (96) further including a sucking portion (96d) for sucking fuel from inside the fuel tank (50, 134, 172),
the side stand (32, 126, 170) is adapted to support the motorcycle (10, 10a, 10b) so that the motorcycle (10, 10a, 10b) tilts on said one side,
the sucking portion (96d) being provided inside the fuel tank (50, 134, 172), on said one side of the centerline of the fuel tank (50, 134, 172).

11. The motorcycle (10, 10a, 10b) according to one of Claims 1 through 10, further comprising a foot board (62, 142) for a rider to rest the rider's feet, at least part of the foot board (62, 142) being lower than a straight line which connects a rotating shaft of the front wheel (28, 122, 160) and a rotating shaft of the rear wheel (38, 132, 168).

12. The motorcycle (10, 10a, 10b) according to one of Claims 1 through 11, further comprising a head pipe (14, 108, 150); a front fork (24, 118, 156) supported by the head pipe (14, 108, 150); a handlebar (30, 124, 162) attached to an upper end portion of the front fork (24, 118, 156); a front cover portion (58, 140, 178) covering the head pipe (14, 108, 150) from ahead; and a handle cover (56, 138, 176) covering the handlebar (30, 124, 162);
a distance between a front end portion of the front cover portion (58, 140, 178) and an upper end portion of the handle cover (56, 138, 176) in an up-down direction being smaller than a diameter of the front wheel (28, 122, 160).

## Patentansprüche

1. Motorrad (10, 10a, 10b), aufweisend:
ein Vorderrad (28, 122, 160) und ein Hinterrad (38, 132, 168);
ein Paar von Seitenrahmen (18, 20, 114a, 114b, 154), nebeneinander angeordnet in einer links- rechts Richtung, um oberhalb des Hinterrades (38, 132, 168) vorbeizugehen;
einen Lagerungskasten (54, 136, 174), gelagert durch die Seitenrahmen (18, 20, 114a, 114b, 154) innerhalb der Seitenabdeckung (66, 144, 182);
einen Kraftstofftank (50, 134, 172), gelagert durch die Seitenrahmen (18, 20, 114a, 114b, 154) hinter dem Lagerungskasten (54, 136, 174) innerhalb der Seitenabdeckung (66, 144, 182);
einen Fahrsitz (68, 146, 184), der den Kraftstofftank (50, 134, 172) und den Lagerungskasten (54, 136, 174) von oben abdeckt;
eine Brennkraftmaschine (34a, 128a, 164a), vorgesehen auf einer niedrigeren Position als der Kraftstofftank (50, 134, 172); und
eine Pumpeneinheit (96) mit einem Abgabeabschnitt (96e) zum Abgeben des abzugebenden Kraftstoffes;
wobei der Kraftstofftank (50, 134, 172) oberhalb des Hinterrades (38, 132, 168) ist, und
ein Bodenabschnitt (76c) des Kraftstofftanks (50, 134, 172) enthält: einen ersten Bodenabschnitt (86), vorgesehen auf einer Seite der Mittellinie des Kraftstofftanks bezüglich der links- rechts Richtung; einen zweiten Bodenabschnitt (88), vorgesehen auf einer gegenüberliegenden Seite des ersten Bodenabschnittes (86) bezüglich der links- rechts Richtung; und einen dritten Bodenabschnitt (90), vorgesehen hinter dem ersten Bodenabschnitt (86) und dem zweiten Bodenabschnitt (88), die sich von vorn nach hinten auf einer nach oben Neigung erstrecken;
wobei der zweite Bodenabschnitt (88) auf einer höheren Position als der erste Bodenabschnitt (86) vorgesehen ist und sich zumindest zu einer Seite hinter der Mittellinie erstreckt, und
der dritte Bodenabschnitt (90) eine nach oben ausnehmende Ausnehmung (90a) in seinem Mittelabschnitt bezüglich der links- rechts Richtung hat,
**gekennzeichnet dadurch, dass**
die Pumpeneinheit (96) mit dem zweiten Bodenabschnitt (88) des Kraftstofftanks (50, 134, 172) verbunden ist, wobei der Abgabeabschnitt (96e) nach unten von dem zweiten Bodenabschnitt (88) des Kraftstofftanks (50, 134, 172) vorspringt.

2. Motorrad (10, 10a, 10b) nach Anspruch 1, wobei die Seitenabdeckung (66, 144, 182) die Seitenrahmen (18, 20, 114a, 114b, 154) von den Seiten derart abdeckt, dass der Lagerungskasten (54, 136, 174) und der Kraftstofftank (50, 134, 172) innerhalb der Seitenabdeckung (66, 144, 182) gelagert sind.

3. Motorrad (10, 10a, 10b) nach Anspruch 2, wobei die Seitenabdeckung (66, 144, 182) das Hinterrad (38, 132, 168) in einer Seitenansicht nicht abdeckt.

4. Motorrad (10, 10a, 10b) nach einem der Ansprüche 1 bis 3, wobei der Abgabeabschnitt (96e) ein niedrigeres Ende als ein niedriges Ende des Kraftstofftanks (50, 134, 172) in einer Seitenansicht hat.

5. Motorrad (10, 10a, 10b) nach einem der Ansprüche 1 bis 4, wobei der Kraftstofftank (50, 134, 172) eine abnehmende Breite bezüglich der links- rechts Richtung in Richtung nach hinten des Kraftstofftanks (50, 134, 172) hat.

6. Motorrad (10, 10a, 10b) nach einem der Ansprüche 1 bis 5, wobei der Bodenabschnitt (76c) außerdem einen vierten Bodenabschnitt (92) enthält, vorgesehen an einer Position weiter vorn als der erste Bodenabschnitt (86) auf einer Seite des zweiten Bodenabschnittes (88), wobei der vierte Bodenabschnitt (92) an einer Position höher als der erste Bodenabschnitt (86), aber niedriger als der zweite Bodenabschnitt (88) ist.

7. Motorrad (10, 10a, 10b) nach einem der Ansprüche 1 bis 6, außerdem aufweisend einen Kraftstoffschlauch (100), verbunden mit dem Abgabeabschnitt (96e), wobei der Kraftstoffschlauch (100) unter dem Bodenabschnitt (76c) in Richtung zu der einen Seite hindurchgeht.

8. Motorrad (10, 10a, 10b) nach Anspruch 6, außerdem aufweisend einen Kraftstoffschlauch (100), verbunden mit dem Abgabeabschnitt (96e), wobei sich der Kraftstoffschlauch (100) unter dem vierten Bodenabschnitt (92) zu einer Seite erstreckt.

9. Motorrad (10, 10a, 10b) nach einem der Ansprüche 1 bis 8, wobei die Pumpeneinheit (96) außerdem einen Ansaugabschnitt (96d) zum Ansaugen von Kraftstoff im Inneren des Kraftstofftanks (50, 134, 172) enthält,
wobei der Ansaugabschnitt (96d) oberhalb des ersten Bodenabschnittes (86) vorgesehen ist.

10. Motorrad (10, 10a, 10b) nach einem der Ansprüche 1 bis 8, außerdem aufweisend einen Seitenständer (32, 126, 170) zum Abstützen des Motorrades (10, 10a, 10b),
wobei die Pumpeneinheit (96) außerdem einen Ansaugabschnitt (96d) zum Ansaugen von Kraftstoff im Inneren des Kraftstofftanks (50, 134, 172) enthält,
der Seitenständer (32, 126, 170) vorgesehen ist, das Motorrad (10, 10a, 10b) so abzustützen, dass sich das Motorrad (10, 10a, 10b) nach einer Seite neigt,
der Ansaugabschnitt (96d) innerhalb des Kraftstofftanks (50, 134, 172) auf einer Seite der Mittellinie des Kraftstofftanks (50, 134, 172) vorgesehen ist.

11. Motorrad (10, 10a, 10b) nach einem der Ansprüche 1 bis 10, außerdem aufweisend ein Fußbrett (62, 142) für einen Fahrer, um die Füße des Fahrers aufzusetzen, wobei zumindest ein Teil des Fußbretts (62, 142) niedriger als eine gerade Linie ist, die eine Drehwelle des Vorderrades (28, 122, 160)und eine Drehwelle des Hinterrades (38, 132, 168) verbindet.

12. Motorrad (10, 10a, 10b) nach einem der Ansprüche 1 bis 11, außerdem aufweisend ein Kopfrohr (14, 108, 150); eine Vordergabel (24, 118, 156), gelagert durch das Kopfrohr (14, 108, 150); eine Lenkstange (30, 124, 162), verbunden mit einem oberen Endabschnitt der Vordergabel (24, 118, 156); einen vorderen Abdeckabschnitt (58, 140, 178), der das Kopfrohr (14, 108, 150) von vorn abdeckt; und eine Griffabdeckung (58, 138, 176), die die Lenkstange (30, 124, 162) abdeckt;
wobei ein Abstand zwischen einem vorderen Endabschnitt des vorderen Abdeckabschnittes (58, 140, 178) und ein oberer Endabschnitt der Griffabdeckung (58, 138, 176) in einer nach oben- nach unten Richtung kleiner als ein Durchmesser des Vorderrades (28, 122, 160) ist.

## Revendications

1. Motocyclette (10, 10a, 10b) comprenant :
une roue avant (28, 122, 160) et une roue arrière (38, 132, 168) ;
deux cadres latéraux (18, 20, 114a, 114b, 154) qui sont disposés côte à côte dans un sens gauche-droite pour passer au-dessus de la roue arrière (38, 132, 168) ;
un coffre de rangement (54, 136, 174) qui est supporté par les cadres latéraux (18, 20, 114a, 114b, 154) à l'intérieur d'un recouvrement latéral (66, 144, 182) ;
un réservoir de carburant (50, 134, 172) qui est supporté par les cadres latéraux (18, 20, 114a, 114b, 154) derrière le coffre de rangement (54, 136, 174), à l'intérieur du recouvrement latéral (66, 144, 182) ;
un siège (68, 146, 184) qui couvre par le haut le réservoir de carburant (50, 134, 172) et le coffre de rangement (54, 136, 174) ;
un moteur (34a, 128a, 164a) qui est prévu plus bas que le réservoir de carburant (50, 134, 172) ; et
une unité de pompe (96) qui présente une partie de sortie (96e) pour la sortie du carburant ;
étant précisé que le réservoir de carburant (50, 134, 172) se trouve au-dessus de la roue arrière (38, 132, 168) et
qu'une partie inférieure (76c) du réservoir de carburant (50, 134, 172) comprend : une première partie inférieure (86) qui est prévue sur un côté d'un axe médian du réservoir de carburant, par rapport au sens gauche-droite ; une deuxième partie inférieure (88) qui est prévue sur un côté opposé de la première partie inférieure (86) par rapport au sens gauche-droite ; et une troisième partie inférieure (90) qui est disposée derrière la première partie inférieure (86) et la deuxième partie inférieure (88) et qui s'étend d'avant en arrière avec une inclinaison vers le haut ;
que la deuxième partie inférieure (88) est prévue plus haut que la première partie inférieure (86) et s'étend au moins vers ledit côté au-delà de l'axe médian, et
que la troisième partie inférieure (90) présente dans sa partie centrale, par rapport au sens gauche-droite, une cavité creusée vers le haut (90a),
**caractérisée en ce que** l'unité de pompe (96) est fixée à la deuxième partie inférieure (88) du réservoir de carburant (50, 134, 172), avec la partie de sortie (96e) qui dépasse, vers le bas, de la deuxième partie inférieure (88) du réservoir de carburant (50, 134, 172).

2. Motocyclette (10, 10a, 10b) selon la revendication 1, étant précisé que le recouvrement latéral (66, 144, 182) couvre les cadres latéraux (18, 20, 114a, 114b, 154) à partir des côtés de telle sorte que le coffre de rangement (54, 136, 174) et le réservoir de carburant (50, 134, 172) sont supportés à l'intérieur du recouvrement latéral (66, 144, 182).

3. Motocyclette (10, 10a, 10b) selon la revendication 2, étant précisé que le recouvrement latéral (66, 144, 182) ne recouvre pas la roue arrière (38, 132, 168), vu de côté.

4. Motocyclette (10, 10a, 10b) selon l'une des revendications 1 à 3, étant précisé que la partie de sortie (96e) a une extrémité inférieure qui se trouve plus bas qu'une extrémité inférieure du réservoir de carburant (50, 134, 172), vue de côté.

5. Motocyclette (10, 10a, 10b) selon l'une des revendications 1 à 4, étant précisé que le réservoir de carburant (50, 134, 172) a une largeur qui va en diminuant, dans le sens gauche droite, vers l'arrière du réservoir de carburant (50, 134, 172).

6. Motocyclette (10, 10a, 10b) selon l'une des revendications 1 à 5, étant précisé que la partie inférieure (76c) comprend par ailleurs une quatrième partie inférieure (92) qui est disposée plus en avant que la première partie inférieure (86), sur un côté de la deuxième partie inférieure (88), la quatrième partie inférieure (92) se trouvant plus haut que la première partie inférieure (86), mais plus bas que la deuxième partie inférieure (88).

7. Motocyclette (10, 10a, 10b) selon l'une des revendications 1 à 6, comprenant par ailleurs un tuyau de carburant (100) qui est relié à la partie de sortie (96e), le tuyau de carburant (100) passant sous la partie inférieure (76c) vers ledit côté.

8. Motocyclette (10, 10a, 10b) selon la revendication 6, comprenant par ailleurs un tuyau de carburant (100) qui est relié à la partie de sortie (96e), le tuyau de carburant (100) s'étendant sous la quatrième partie inférieure (92) vers ledit côté.

9. Motocyclette (10, 10a, 10b) selon l'une des revendications 1 à 8, étant précisé que l'unité de pompe (96) comprend par ailleurs une partie d'aspiration (96d) pour aspirer le carburant à l'intérieur du réservoir de carburant (50, 134, 172),
la partie d'aspiration (96d) étant disposée au-dessus de la première partie inférieure (86).

10. Motocyclette (10, 10a, 10b) selon l'une des revendications 1 à 8, comprenant par ailleurs
une béquille latérale (32, 126, 170) pour supporter la motocyclette (10, 10a, 10b),
l'unité de pompe (96) comprenant par ailleurs une partie d'aspiration (96d) pour aspirer le carburant à l'intérieur du réservoir de carburant (50, 134, 172),
la béquille latérale (32, 126, 170) est apte à supporter la motocyclette (10, 10a, 10b) de telle sorte que la motocyclette (10, 10a, 10b) soit inclinée sur ledit côté,
la partie d'aspiration (96d) étant prévue à l'intérieur du réservoir de carburant (50, 134, 172), sur ledit côté de l'axe médian du réservoir de carburant (50, 134, 172).

11. Motocyclette (10, 10a, 10b) selon l'une des revendications 1 à 10, comprenant par ailleurs un repose-pieds (62, 142) sur lequel un motocycliste pose les pieds, une partie au moins du repose-pieds (62, 142) se trouvant plus bas qu'une ligne droite qui relie un axe de rotation de la roue avant (28, 122, 160) et un axe de rotation de la roue arrière (38, 132, 168).

12. Motocyclette (10, 10a, 10b) selon l'une des revendications 1 à 11, comprenant par ailleurs un tube supérieur (14, 108, 150) ; une fourche avant (24, 118, 156) qui est supportée par le tube supérieur (14, 108, 150) ; un guidon (30, 124, 162) qui est fixé à une partie d'extrémité supérieure de la fourche avant (24, 118, 156) ; une partie de recouvrement avant (58, 140, 178) qui couvre par devant le tube supérieur (14, 108, 150) ; et un recouvrement de guidon (56, 138, 176) qui couvre le guidon (30, 124, 162) ;
une distance entre une partie d'extrémité avant de la partie de recouvrement avant (58, 140, 178) et une partie d'extrémité supérieure du recouvrement de guidon (56, 138, 176) dans un sens haut-bas étant inférieure à un diamètre de la roue avant (28, 122, 160).
